# EUROPEAN PATENT APPLICATION

(11) **EP 1 959 469 A2**
(43) Date of publication of application: **20.08.2008**
(21) Application number: 08001718.9
(22) Date of filing: 30.01.2008
(51) Int. Cl.: H01H 19/20

(54) **Key input device for mobile phone**

(30) Priority: 16.02.2007 KR 20070016806
(71) Applicant: Samsung Electronics Co., Ltd., Suwon-si, Gyeonggi-Do (KR)
(72) Inventor: Byun, Chang-Heum, Suwon-si Gyeonggi-do (KR)
(74) Representative: Lang, Johannes

(57) **Abstract**

A key input device (10) for a mobile phone is provided. The key input device includes a printed circuit board (50) with a plurality of dome switches (51). The key input device further includes a holder unit (20) provided on the top of the print circuit board, a wheel key (30) provided on the top of the holder unit (20) and rotatably assembled to the holder unit and a rotary means (40) interposed between the holder unit and the wheel key, the rotary means having a plurality of balls (43) for allowing the wheel key to be rotated in such a manner that frictional force and wear produced by the rotation of the wheel key can be reduced.

## Description

### BACKGROUND OF THE INVENTION

### 1. Field of the Invention:

The present invention relates to a key input device for a mobile phone. More particularly, the present invention relates to a key input device for a mobile phone, a wheel key of which is provided with a ball bearing.

### 2. Description of the Related Art:

Typically, the term "mobile phone" refers to an appliance used for wireless communication with a counterpart while being carried by a user. For example, mobile phones include Hand Held Phones (HHPs), CT-2 cellular phones, digital phones, Personal Digital Assistants (PDAs), or the like, and may be classified into various types, depending on the external appearances thereof. For example, a mobile phone may be classified as a bar-type, a flip-type or a folder-type mobile phone, depending on its external appearance. The above-mentioned conventional mobile phones essentially include an antenna, a data input device, a data output device, a data transmission device and a data reception device. Of course, keypads allowing data input through a pushing operation are data input devices which are popularly used.

Basically, a keypad for use in data input includes an arrangement of a plurality of keys. Such keys include a send (SND) key, a cancel key, a clear register (CLR) key, numeric keys, character keys, an end (END) key, function keys and a power (PWR) key.

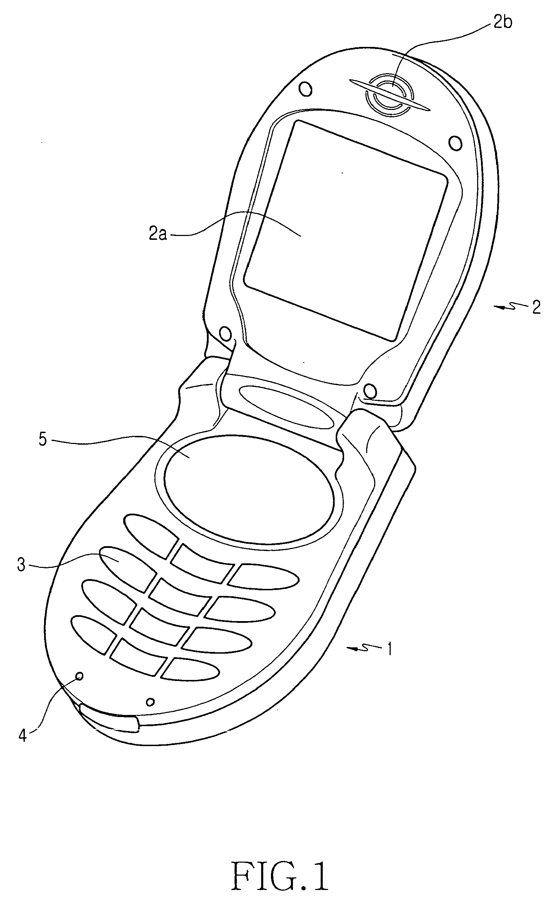

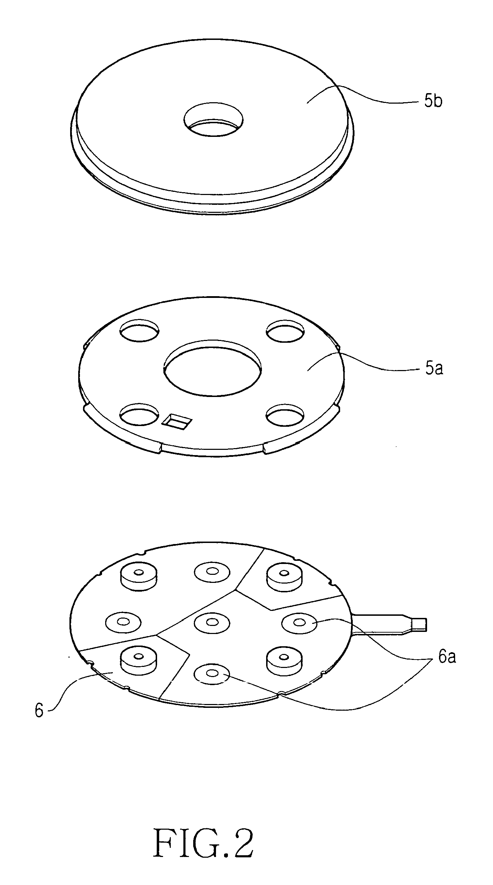

Here, a configuration of a keypad for a folder-type mobile phone will be described. Referring to FIGs. 1 and 2, a conventional folder-type mobile phone includes a main body 1 and a folder 2. The main body 1 is equipped with a keypad 3 formed by an arrangement of plural keys, and a microphone 4. The folder 2 is provided with a liquid crystal display unit 2a and a speaker 2b. In addition, the main body 1 is provided with a wheel key 5 which is rotatable so as to execute menu and operating mode functions for the mobile phone.

As shown in FIG. 2, the wheel key 5 includes a printed circuit board 6 provided with a plurality of dome switches 6a, a mounting member 5a mounted on the printed circuit board 6, and a rotary key 5b rotatably coupled to the mounting member 5a.

However, a wheel key provided in a conventional mobile phone has a problem in that frictional force and wear occur between the mounting member and the wheel key when a user quickly rotates the wheel key and rapidly changes functions so as to select a desired function according to various operating modes of menu. As a result, the rotating movement of the wheel key becomes slow, manipulation for rapid function change cannot be executed and the reliability and life span of such a mobile phone product are deteriorated.

### SUMMARY OF THE INVENTION

An aspect of the present invention is to address at least the above-mentioned problems and/or disadvantages occurring in the prior art and to provide at least the advantages described below. Accordingly, an aspect of the present invention is to provide a key input device for a mobile phone, wherein the key input device has a wheel key for executing menu and operating mode functions, the wheel key being provided with a ball bearing so that the wheel key can be easily and conveniently moved.

In addition, another aspect of the present invention is to provide a key input device for a mobile phone, wherein the key input device has a wheel key for executing menu and operating mode functions, the wheel key being provided with a ball bearing so as to prevent the occurrence of frictional force when the wheel key is rotated, thereby rendering the rotation of the wheel key smooth, and so as to prevent the occurrence of wear when the wheel key is rotated, thereby increasing the lifespan of such a mobile phone product.

According to an aspect of the present invention, a key input device for a mobile phone with a printed circuit board having a plurality of dome switches is provided. The key input device includes a holder unit provided on the top of the printed circuit board, a wheel key provided on the top of the holder unit and rotatably assembled to the holder unit and a rotary means interposed between the holder unit and the wheel key, the rotary means having a plurality of balls for allowing the wheel key to be rotated in such a manner that frictional force and wear according to the rotation of the wheel key can be reduced.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:
FIG. 1 is a perspective view illustrating a conventional folder-type mobile phone in the opened state;
FIG. 2 is an exploded perspective view illustrating a conventional wheel key;
FIG. 3 is an exploded perspective view illustrating a construction of a key input device for a mobile phone according to an exemplary embodiment of the present invention;
FIG. 4 is an exploded view illustrating how to assemble the key input device of an exemplary embodiment of the present invention;
FIG. 5 is a perspective view illustrating a ball bearing mounted on the wheel key of the key input device for a mobile phone according to an exemplary embodiment of the present invention;
FIG. 6 is a perspective view illustrating a key input device for a mobile phone according to an exemplary embodiment of the present invention in the assembled state;
FIG. 7 is a perspective view illustrating the cross-section of line A-A' in FIG. 6;
FIG. 8 is a cross-sectional view taken along line A-A' in FIG. 6; and
FIG. 9 is a perspective view showing a key input device according to an exemplary embodiment of the present invention mounted on a mobile phone.

Throughout the drawings, it should be noted that like reference numbers are used to depict the same or similar elements, features and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

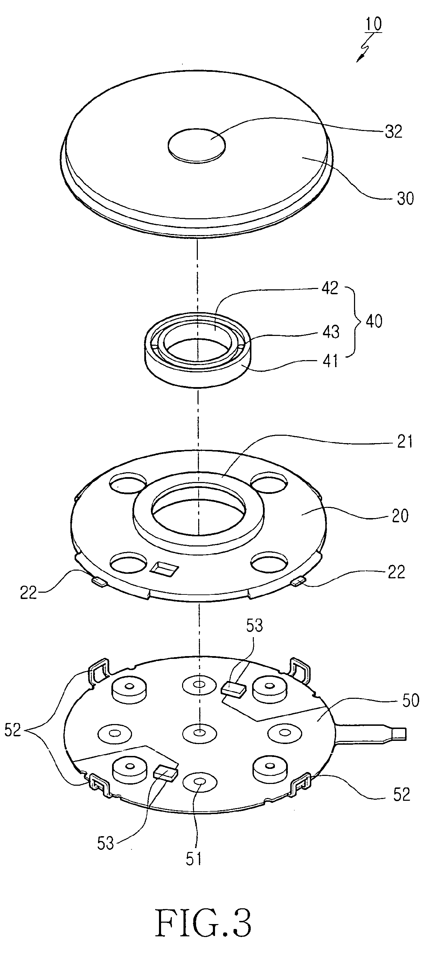

Referring to FIGs. 3, 4 and 9, a key input device 10 includes a holder unit 20, a wheel key 30, and a rotary means 40, wherein the holder unit 20 is provided on the top of a printed circuit board 50, which is to be installed within a main body 100 of a mobile phone, in such a manner that the wheel key 30can be rotated relative to the holder unit 20. The rotary means 40 is interposed between the holder unit 20 and the wheel key 30, so that a plurality of balls 43 provided within the rotary means 40 are rotatable when the wheel key 30 is rotated, thereby reducing frictional force and wear produced by the rotation of the wheel key 30.

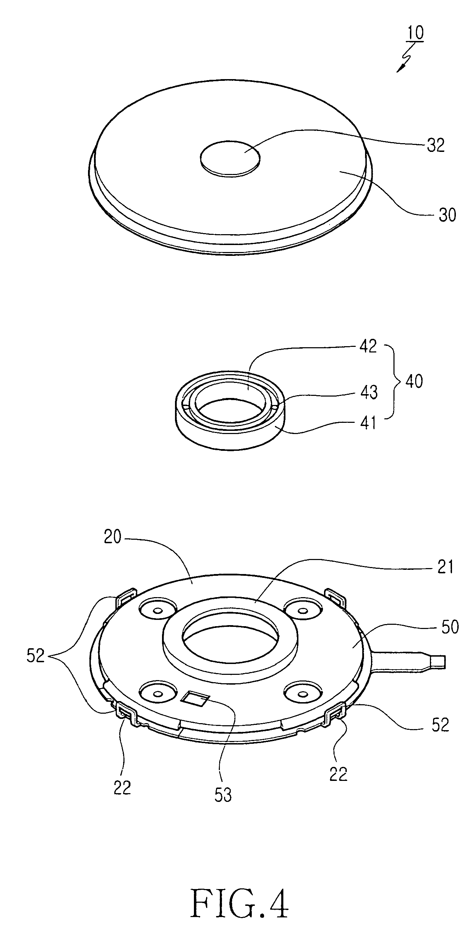

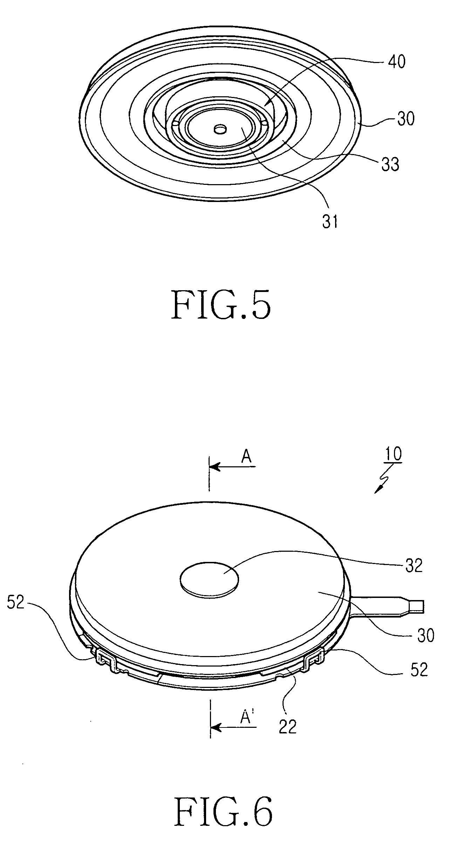

As illustrated in FIGs. 4 and 5, rotary means 40 includes a first bearing element 41 and a second bearing element 42. The holder unit 20 is provided with a settling member 21 so that the first bearing element 41 can be fitted and settled in the settling member 21. A fastening part 31 is formed on the bottom side of the wheel key 30 and is fitted in the second bearing element 42 so as to support the rotation of the wheel key 30.

Referring to FIG. 5 illustrating an exemplary embodiment, the rotary means 40 may be implemented by a ball bearing.

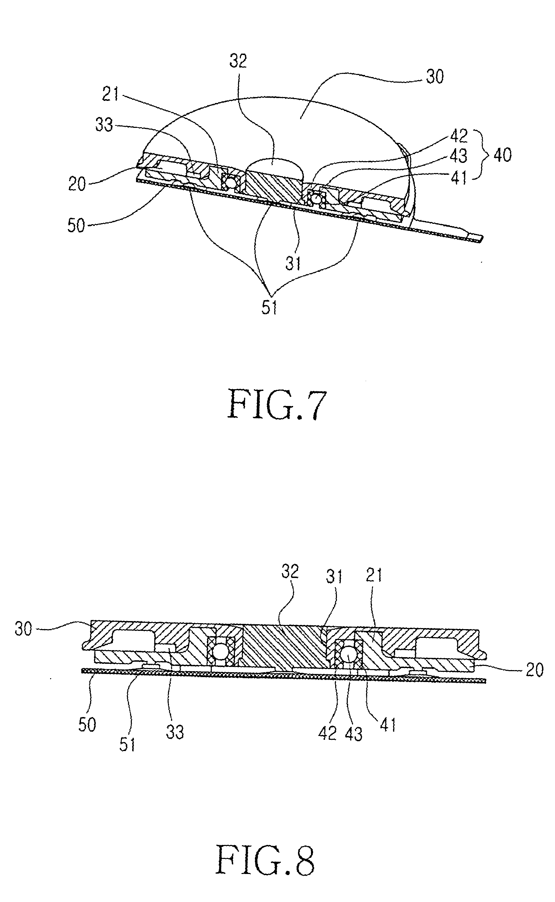

As illustrated in FIGs. 7 and 8, an exemplary ball bearing unit 40 includes a first bearing element 41 at the outer part thereof, the first bearing element 41 being adapted to be engaged with the settling member 21 of the holder unit 20, a second bearing element 42 provided at the inner part thereof, the second bearing element 42 being adapted to be engaged with the wheel key 30, and a plurality of balls 43 interposed between the first and second bearing elements so as to render the wheel key 30 rotatable.

Referring to FIG. 6, the wheel key 30 is provided with a center key 32 at the center thereof.

As illustrated in FIG. 3, one or more anchoring parts 22 are formed on the periphery of the holder unit 20 so as to allow the holder unit 20 to be anchored to the top of the printed circuit board 50, and one or more anchoring loops 52 are formed on the printed circuit board 50 so as to allow the anchoring parts 22 to be coupled to the anchoring loops 52, thereby anchoring the holder unit 20.

As illustrated in FIGs. 3 to 5, the printed circuit board 50 includes one or more rotation detecting sensors 53 adapted to detect the rotation of the wheel key 30 by detecting the variation of magnetic force of a magnet 33 provided on the wheel key 30.

The wheel key 30 may be formed from a metallic material.

The operation of the key input device for a mobile phone configured as described above according to an exemplary embodiment of the present invention will be described in more detail with reference to FIGs. 3 to 9.

As illustrated in FIGs. 3 and 4, the holder unit 20 is provided on the top of the printed circuit board 50, on which a plurality of dome switches 51 are mounted. At this time, the one or more anchoring parts 22 provided on the holder unit 20 are coupled to the one or more anchoring loops 52 provided on the printed circuit board 50, respectively, thereby anchoring the holder unit 20.

As illustrated in FIGs. 7 and 8, the second bearing element 42 of the rotary means 40 is engaged with the fastening part 31 provided on the bottom side of the wheel key 30. The first bearing element 41 of the rotary means 40 is fitted and settled in the settling member 21.

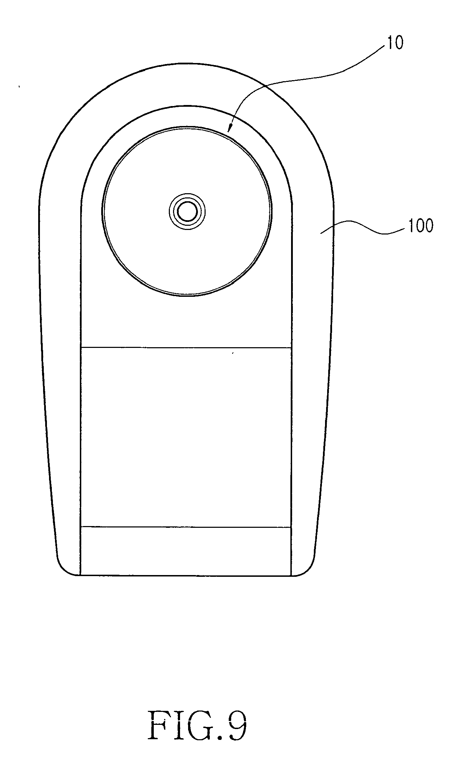

The key input device 10 including a wheel key 30 may be mounted on the main body 100 of a mobile phone, as shown in FIG. 9.

In this state, if the wheel key 30 is rotated as shown in FIG. 8, the second bearing element 42 engaged with the wheel key 30 is rotated together with the wheel key 30. As such, the first and second ball bearing elements 41 and 42 are organically rotated because the balls 43 are interposed between the first and second ball bearing elements 41 and 42, thereby rendering the wheel key 30 rotatable.

Because the first bearing element 41 is engaged with the holder unit 20 and the second bearing element 42 is engaged with the wheel key 30, the first bearing element 41 is fixed together with the holder unit 20, thereby supporting the rotation of the wheel key 30 and the second bearing element 42 when the second bearing element 42 is rotated together with the wheel key 30.

At this time, because the printed circuit board 50 is provided with the one or more rotation detecting sensors 53 as shown in FIGs. 3 and 5, the rotation detecting sensors 53 can sense the rotation of the wheel key 30 by detecting the variation of the magnetic force of the magnet 33 provided on the wheel key 30.

As described above, by providing a rotary means 40 on the wheel key 30, it is possible to reduce the frictional force produced by the rotation of the wheel key 30, thereby rendering the wheel key 30 smoothly rotatable, and to prevent the wear of the wheel key 30 occurring when the wheel key 30 rotates, thereby increasing the life span of a mobile phone product having such a wheel key 30. Consequently, the reliability of the mobile phone product can be improved. Also, while an exemplary embodiment has been shown with reference to a folder-type mobile phone, the present invention is not limited to a folder-type mobile phone, but is applicable to all kinds of mobile phones.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A key input device for a mobile phone with a printed circuit board, on which a plurality of dome switches are mounted, the key input device comprising:
a holder unit provided on the top of the printed circuit board;
a wheel key provided on the top of the holder unit and rotatably assembled to the holder unit; and
a rotary means interposed between the holder unit and the wheel key, the rotary means having a plurality of balls for allowing the wheel key to be rotated in such a manner that frictional force and wear produced by the rotation of the wheel key can be reduced.

2. The key input device as claimed in claim 1, further comprising a settling member on the holder unit, wherein the rotary means comprises a first bearing element fitted and settled in the settling member.

3. The key input device as claimed in claim 1, further comprising a fastening part formed on the bottom side of the wheel key so as to support the rotation of the wheel key, wherein the rotary means comprises a second bearing element fitted on the fastening part.

4. The key input device as claimed in claim 1, wherein the rotary means comprises a ball bearing, the ball bearing comprising a first bearing element positioned at the outer part of the ball bearing and assembled with the holder unit, a second bearing element positioned at the inner part of the ball bearing and assembled with the wheel key, and a plurality of balls interposed between the first and second bearing elements so as to render the wheel key to be rotatable.

5. The key input device as claimed in claim 1, further comprising a center key at the center of the wheel key.

6. The key input device as claimed in claim 1, further comprising one or more anchoring parts formed on the periphery of the holder unit so as to anchor the holder unit on the top of the printed circuit board.

7. The key input device as claimed in claim 6, further comprising one or more anchoring loops on the printed circuit board, the anchoring loops being coupled with the anchoring parts, thereby anchoring the holder unit.

8. The key input device as claimed in claim 1, further comprising one or more rotation detecting sensors on the printed circuit board, the sensors detecting the rotation of the wheel key by detecting the variation of magnetic force of a magnet provided on the wheel key.

9. The key input device as claimed in claim 1, wherein the wheel key comprises a metallic material.

10. A portable mobile phone, the portable mobile phone comprising:
a main body, the main body comprising;
a holder unit;
a wheel key; and
a rotary means coupling the holder unit and the wheel key, wherein the rotary means comprises a plurality of balls for allowing the wheel key to be rotated relative to the holder unit.

11. The portable mobile phone as claimed in claim 10, further comprising a settling member on the holder unit, wherein the rotary means comprises a first bearing element coupled to the settling member.

12. The portable mobile phone as claimed in claim 10, further comprising a fastening part formed on the bottom side of the wheel key, wherein the rotary means comprises a second bearing element coupled to the fastening part.

13. The portable mobile phone as claimed in claim 10, wherein the rotary means comprises a ball bearing, the ball bearing comprising a first bearing element positioned at the outer part of the ball bearing and coupled to the holder unit, a second bearing element positioned at the inner part of the ball bearing and coupled to the wheel key, and a plurality of balls interposed between the first and second bearing elements so as to render the wheel key to be rotatable.

14. The portable mobile phone as claimed in claim 10, further comprising a center key at the center of the wheel key.

15. The portable mobile phone as claimed in claim 10, further comprising a printed circuit board, the printed circuit board comprising a plurality of dome switches, wherein the holder unit is coupled between the printed circuit board and the wheel key.

16. The portable mobile phone as claimed in claim 15, further comprising one or more anchoring parts formed on the periphery of the holder unit so as to anchor the holder unit on the top of the printed circuit board.

17. The portable mobile phone as claimed in claim 16, further comprising one or more anchoring loops on the printed circuit board, the anchoring loops being coupled with the anchoring parts, thereby anchoring the holder unit.

18. The portable mobile phone as claimed in claim 15, further comprising one or more rotation detecting sensors on the printed circuit board, the sensors detecting the rotation of the wheel key by detecting the variation of magnetic force of a magnet provided on the wheel key.

19. The portable mobile phone as claimed in claim 10, wherein the wheel key comprises a metallic material.

20. A key input device, the key input device comprising:
a holder unit;
a wheel key; and
a rotary means coupling the holder unit and the wheel key, wherein the rotary means comprises a plurality of balls for allowing the wheel key to be rotated relative to the holder unit.
